# EUROPEAN PATENT SPECIFICATION

(11) **EP 4 086 695 B1**
(45) Date of publication and mention of the grant of the patent: **20.08.2025**
(21) Application number: 21754314.9
(22) Date of filing: 28.01.2021
(51) Int. Cl.: G02F 1/1333, G06F 1/16

(54) **ELECTRONIC DEVICE COMPRISING DISPLAY**
ELEKTRONISCHE VORRICHTUNG MIT ANZEIGE
DISPOSITIF ÉLECTRONIQUE COMPRENANT UN AFFICHAGE

(30) Priority: 10.02.2020 KR 20200015414
(43) Date of publication of application: 09.11.2022
(73) Proprietor: Samsung Electronics Co., Ltd., Suwon-si, Gyeonggi-do 16677 (KR)
(72) Inventor: JUNG, Hunjo, Suwon-si, Gyeonggi-do 16677 (KR); KIM, Jonghae, Suwon-si, Gyeonggi-do 16677 (KR); AHN, Sungho, Suwon-si, Gyeonggi-do 16677 (KR)
(74) Representative: Gulde & Partner
(86) International application number: PCT/KR2021/001171
(87) International publication number: WO 2021/162298

(56) References cited:
- EP-A1- 3 330 832
- EP-A1- 3 410 252
- KR-A- 20140 108 827
- KR-A- 20170 043 076
- KR-A- 20180 069 763
- KR-A- 20200 004 485
- US-A1- 2014 211 399
- US-A1- 2018 341 290
- US-B2- 10 306 773

## Description

### [Technical Field]

Embodiments of the disclosure described herein relate to an electronic device including a display.

### [Background Art]

An electronic device, such as a smartphone, a wearable device, or the like, which includes a display has been widely used with the development of mobile communication technology. The display may include a display panel, such as a liquid crystal display panel and an organic light emitting display panel, and a plurality of layers for performing additional functions.

The following publications are generically relevant to electronic devices comprising foldable or bent displays:
- US 2018/341290 Al entitled "Electronic Device Including Module Mounted In Sunken Area Of Layer";
- EP 3 410 252 Al entitled " Electronic Device Including Module Mounted In Sunken Area Of Layer";
- KR 2018 0069763 A entitled "Flexible Display Device And Method For Manufacturing Thereof"; and
- KR 2020 0004485 A entitled "Display Apparatus Comprising Display Unit Including An Indented Shape".

### [Disclosure]

### [Technical Problem]

The thickness of the electronic device may be determined based on the arrangement of the display panel and the plurality of layers included in the electronic device. Recently, in order to increase user portability, an electronic device having a small thickness and strong impact resistance is required.

The display may include a display driver IC (DDI) that transfers signals for driving pixels of the display panel. The display driver IC may be disposed in various forms in the display. In particular, the display driver IC may be located on a substrate of the display panel. In this case, a partial area of the substrate on which the display driver IC is located may be bent, and therefore a bezel of the display may be reduced.

Embodiments of the disclosure provide an electronic device that is capable of reducing the area of a dead space and that has a small thickness and improved impact resistance.

### [Technical Solution]

An electronic device according to an embodiment of the disclosure includes a display panel including a first area, a second area facing the first area, and a bending area located between the first area and the second area, a cover layer that is located under the first area of the display panel and that includes at least one of a light blocking layer, a buffer layer, a lower sheet, or a metal layer, and a spacer located between the second area of the display panel and the cover layer. The cover layer includes a first cover area that overlaps the spacer in a first direction and a second cover area that does not overlap the spacer in the first direction, the first direction being a thickness direction of the first area. A thickness of the cover layer in the first direction in the first cover area is smaller than a thickness of the cover layer in the first direction in the second cover area.

Preferably, the buffer layer includes a first buffer layer located in the first cover area and a second buffer layer located in the second cover area, and a thickness of the first buffer layer in the first direction is smaller than a thickness of the second buffer layer in the first direction.

Preferably, the first buffer layer is spaced apart from the second buffer layer.

Preferably, the first buffer layer is integrally formed with the second buffer layer.

Preferably, the first buffer layer and the second buffer layer contain different materials.

Preferably, the spacer does not overlap at least one of the lower sheet or the metal layer in the first direction.

Preferably, the lower sheet contains polyimide or graphite.

Preferably, the cover layer further includes a sensing panel.

Preferably, the electronic device further comprises a display driver IC located in the second area of the display panel.

Preferably, the electronic device further comprises: a first protective film located between the first area of the display panel and the cover layer; and a second protective film located between the second area of the display panel and the spacer.

Preferably, the lower sheet is located under the buffer layer wherein the lower sheet does not overlap the spacer in the first direction.

Preferably, the metal layer is located under the buffer layer.

Preferably, the metal layer does not overlap the spacer in the first direction.

Preferably, the light blocking layer is located between the first area of the display panel and the buffer layer, wherein the light blocking layer includes an embo pattern.

### [Advantageous Effects]

According to the embodiments of the disclosure, the electronic device may achieve a reduction in thickness and dead space and an improvement in impact resistance.

In addition, the disclosure may provide various effects that are directly or indirectly recognized.

### [Description of Drawings]

FIG. 1 is a front perspective view of an electronic device according to an embodiment.
FIG. 2 is a rear perspective view of the electronic device of FIG. 1.
FIG. 3 is a perspective view of a display panel included in an electronic device according to an embodiment.
FIG. 4 is a sectional view taken along line A-A' of FIG. 1 in an electronic device according to an embodiment.
FIG. 5 is a plan view illustrating components included in a cover layer and a spacer in the electronic device according to an embodiment.
FIG. 6 is a sectional view illustrating display panels depending on the sizes of radii of curvature.
FIG. 7 is a sectional view taken along line A-A' of FIG. 1 in an electronic device according to an embodiment.
FIG. 8 is a sectional view taken along line A-A' of FIG. 1 in an electronic device according to an embodiment.
FIG. 9 is a sectional view taken along line A-A' of FIG. 1 in an electronic device according to an embodiment.
FIG. 10 is a sectional view taken along line A-A' of FIG. 1 in an electronic device according to an embodiment.
FIG. 11 is a sectional view taken along line A-A' of FIG. 1 in an electronic device according to an embodiment.

With regard to description of the drawings, identical or similar reference numerals may be used to refer to identical or similar components.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope of the disclosure.

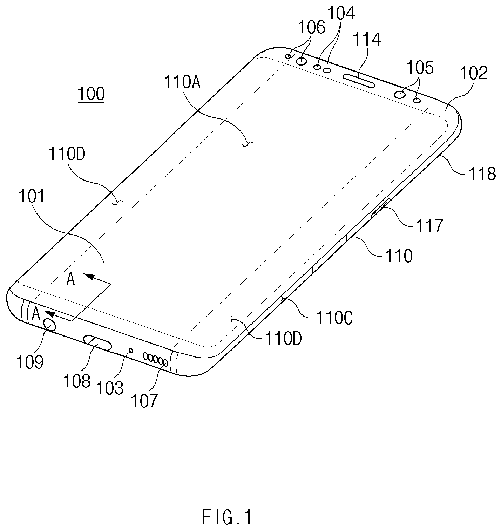

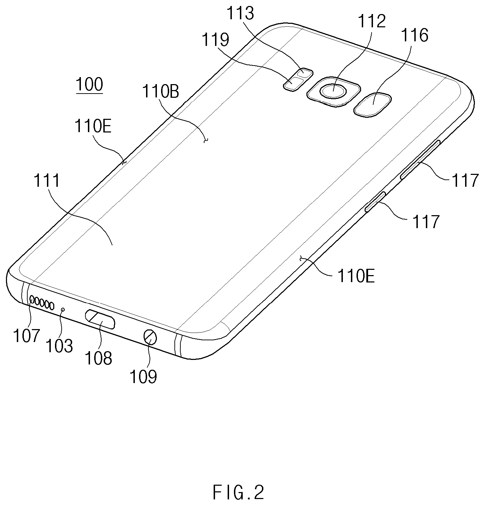

Referring to FIGS. 1 and 2, an electronic device 100 according to an embodiment may include a housing 110 that includes a first surface (or, a front surface) 110A, a second surface (or, a rear surface) 110B, and a side surface 110C surrounding a space between the first surface 110A and the second surface 110B. In another embodiment (not illustrated), the housing may refer to a structure that forms some of the first surface 110A, the second surface 110B, and the side surface 110C of FIG. 1. According to an embodiment, the first surface 110A may be formed by a front plate 102, at least a portion of which is substantially transparent (e.g., a glass plate including various coating layers, or a polymer plate). The second surface 110B may be formed by a back plate 111 that is substantially opaque. The back plate 111 may be formed of, for example, coated or colored glass, ceramic, a polymer, metal (e.g., aluminum, stainless steel (STS), or magnesium), or a combination of at least two of the aforementioned materials. The side surface 110C may be formed by a side bezel structure (or, a "side member") 118 that is coupled with the front plate 102 and the back plate 111 and that contains metal and/or a polymer. In some embodiments, the back plate 111 and the side bezel structure 118 may be integrally formed with each other and may contain the same material (e.g., a metallic material such as aluminum).

In the illustrated embodiment, the front plate 102 may include, at opposite long edges thereof, two first areas 110D that curvedly and seamlessly extend from the first surface 110A toward the back plate 111. In the illustrated embodiment (refer to FIG. 2), the back plate 111 may include, at opposite long edges thereof, two second areas 110E that curvedly and seamlessly extend from the second surface 110B toward the front plate 102. In some embodiments, the front plate 102 (or, the back plate 111) may include only one of the first areas 110D (or, the second areas 110E). In another embodiment, a part of the first areas 110D or the second areas 110E may not be included. In the embodiments, when viewed from a side of the electronic device 100, the side bezel structure 118 may have a first thickness (or, width) at sides not including the first areas 110D or the second areas 110E and may have a second thickness at sides including the first areas 110D or the second areas 110E, the second thickness being smaller than the first thickness.

According to an embodiment, the electronic device 100 may include at least one of a display 101, audio modules 103, 107, and 114, sensor modules 104, 116, and 119, camera modules 105, 112, and 113, key input devices 117, a light emitting element 106, and connector holes 108 and 109. In some embodiments, at least one component (e.g., the key input devices 117 or the light emitting element 106) among the aforementioned components may be omitted from the electronic device 100, or other component(s) may be additionally included in the electronic device 100.

The display 101, for example, may be exposed through most of the front plate 102. In some embodiments, at least a portion of the display 101 may be exposed through the front plate 102 that forms the first surface 110A and the first areas 110D of the side surface 110C. In some embodiments, the periphery of the display 101 may be formed to be substantially the same as the shape of the adjacent outside edge of the front plate 102. In another embodiment (not illustrated), to expand the area by which the display 101 is exposed, the gap between the outside edge of the display 101 and the outside edge of the front plate 102 may be formed to be substantially constant.

In another embodiment (not illustrated), a recess or opening may be formed in a portion of a screen display area of the display 101, and the electronic device 100 may include at least one of the audio module 114, the sensor module 104, the camera module 105, or the light emitting element 106 that is aligned with the recess or the opening. In another embodiment (not illustrated), the electronic device 100 may include, on the rear surface of the screen display area of the display 101, at least one of the audio module 114, the sensor module 104, the camera module 105, the fingerprint sensor 116, or the light emitting element 106. In another embodiment (not illustrated), the display 101 may be coupled with, or disposed adjacent to, touch detection circuitry, a pressure sensor for measuring the intensity (pressure) of a touch, and/or a digitizer for detecting a stylus pen of a magnetic field type. In some embodiments, at least a part of the sensor modules 104 and 119 and/or at least a part of the key input devices 117 may be disposed in the first areas 110D and/or the second areas 110E.

The audio modules 103, 107, and 114 may include the microphone hole 103 and the speaker holes 107 and 114. A microphone for obtaining external sound may be disposed in the microphone hole 103, and in some embodiments, a plurality of microphones may be disposed in the microphone hole 103 to sense the direction of sound. The speaker holes 107 and 114 may include the external speaker hole 107 and the receiver hole 114 for telephone call. In some embodiments, the speaker holes 107 and 114 and the microphone hole 103 may be implemented as a single hole, or a speaker (e.g., a piezoelectric speaker) may be included without the speaker holes 107 and 114.

The sensor modules 104, 116, and 119 may generate an electrical signal or a data value that corresponds to an operational state inside the electronic device 100 or an environmental state external to the electronic device 100. The sensor modules 104, 116, and 119 may include, for example, the first sensor module 104 (e.g., a proximity sensor) and/or the second sensor module (not illustrated) (e.g., a fingerprint sensor) that is disposed on the first surface 110A of the housing 110, and/or the third sensor module 119 (e.g., an HRM sensor) and/or the fourth sensor module 116 (e.g., a fingerprint sensor) that is disposed on the second surface 110B of the housing 110. The fingerprint sensor may be disposed not only on the first surface 110A of the housing 110 (e.g., the display 101) but also on the second surface 110B. The electronic device 100 may further include a non-illustrated sensor module, for example, at least one of a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, or an illuminance sensor 104.

The camera modules 105, 112, and 113 may include the first camera device 105 disposed on the first surface 110A of the electronic device 100, and the second camera device 112 and/or the flash 113 disposed on the second surface 110B. The camera devices 105 and 112 may include one or more lenses, an image sensor, and/or an image signal processor. The flash 113 may include, for example, a light emitting diode or a xenon lamp. In some embodiments, two or more lenses (an IR camera lens, a wide angle lens, and a telephoto lens) and image sensors may be disposed on one surface of the electronic device 100.

The key input devices 117 may be disposed on the side surface 110C of the housing 110. In another embodiment, the electronic device 100 may not include all or some of the aforementioned key input devices 117, and the key input devices 117 not included may be implemented in a different form, such as a soft key, on the display 101. In some embodiments, the key input devices may include the sensor module 116 disposed on the second surface 110B of the housing 110.

The light emitting element 106, for example, may be disposed on the first surface 110A of the housing 110. The light emitting element 106, for example, may provide state information of the electronic device 100 in the form of light. In another embodiment, the light emitting element 106 may provide, for example, a light source that operates in conjunction with operation of the camera module 105. The light emitting element 106 may include, for example, an LED, an IR LED, and a xenon lamp.

The connector holes 108 and 109 may include the first connector hole 108 capable of accommodating a connector (e.g., a USB connector) for transmitting and receiving power and/or data with an external electronic device, and/or the second connector hole (e.g., an earphone jack) 109 capable of accommodating a connector for transmitting and receiving audio signals with an external electronic device.

In some embodiments, the electronic device 100 may be a foldable electronic device in which the screen display area of the display 101 can be folded. When the electronic device 100 is a foldable electronic device, the electronic device 100 may include a foldable housing, a hinge cover that covers a foldable portion of the foldable housing, and a flexible or foldable display disposed in a space formed by the foldable housing.

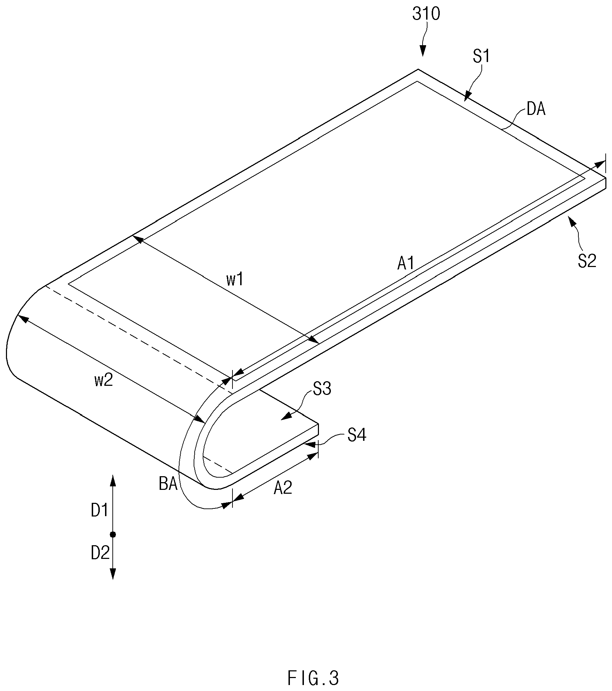

Hereinafter, an electronic device according to an embodiment will be described with reference to FIG. 3. FIG. 3 is a perspective view of a display panel included in the electronic device according to an embodiment.

Referring to FIG. 3, the display panel 310 included in the electronic device according to an embodiment may include a first area A1, a second area A2, and a bending area BA located between the first area A1 and the second area A2.

The bending area BA may extend from the first area A1 and may be bent in one direction. The second area A2 may extend from the bending area BA and may face the first area A1. That is, the bending area BA of the display panel 310 may be bent such that the first area A1 and the second area A2 face each other. For example, the center of curvature of the bending area BA may be located between the first area A1 and the second area A2.

The first area A1 of the display panel 310 may include a first surface S1 and a second surface S2 facing each other. The display panel 310 may include a display area DA on the first surface S1 of the first area A1. The display area DA may include at least one pixel and may display an image. The second area A2 of the display panel 310 may include a third surface S3 facing the second surface S2 of the first area A1 and a fourth surface S4 facing the third surface S3.

In FIG. 3, the width w1 of the first area A1, the width w2 of the bending area BA, and the width (not illustrated) of the second area A2 of the display panel 310 are illustrated as being all the same. However, the width of the display panel 310 is not limited thereto. For example, the width w2 of the bending area BA and the width (not illustrated) of the second area A2 of the display panel 310 may be smaller than the width w1 of the first area A1 of the display panel 310.

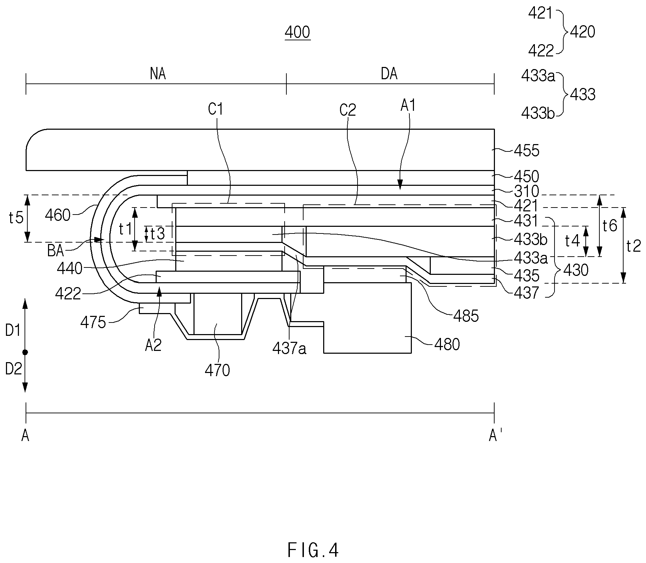

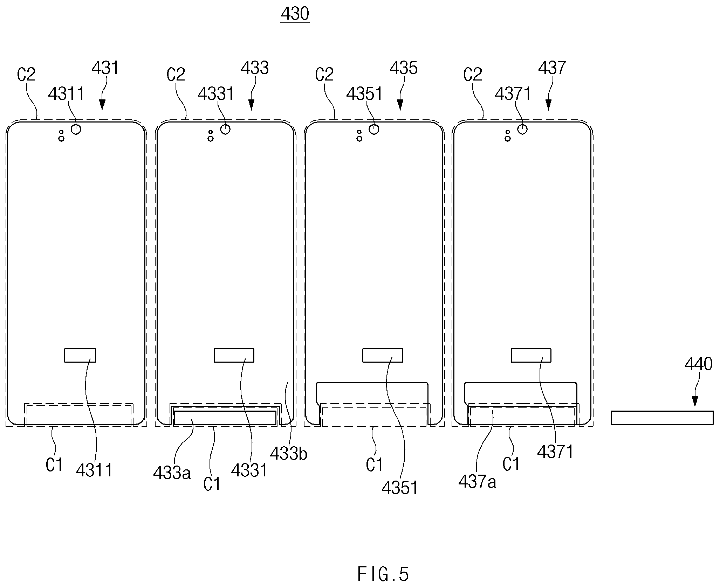

Hereinafter, an electronic device according to an embodiment will be described with reference to FIGS. 4 and 5. FIG. 4 is a sectional view taken along line A-A' of FIG. 1 in the electronic device according to an embodiment. FIG. 5 is a plan view illustrating components included in a cover layer and a spacer in the electronic device according to an embodiment.

Referring to FIG. 4, the electronic device 400 according to an embodiment may include a display panel 310, a protective film 420, the cover layer 430, the spacer 440, an optically clear adhesive layer 450, a window 455, a bending part protection layer 460, a display driver IC (DDI) 470, a DDI protection layer 475, a flexible printed circuit board (FPCB) 480, and a conductive adhesive layer 485.

The display panel 310 may include a first area A1, a second area A2, and a bending area BA located between the first area A1 and the second area A2. The first area A1 of the display panel 310 may include a first surface S1 (refer to FIG. 3) and a second surface S2 (refer to FIG. 3) that face each other. The second area A2 of the display panel 310 may include a third surface S3 (refer to FIG. 3) and a fourth surface S4 (refer to FIG. 3) that face each other. The bending area BA may be bent about one axis, and thus the second surface S2 of the first area A1 of the display panel 310 may face the third surface S3 of the second area A2.

The protective film 420 may include a first protective film 421 located on the second surface S2 of the first area A1 included in the display panel 310 and a second protective film 422 located on the third surface S3 of the second area A2 included in the display panel 310. That is, the first protective film 421 may be located under the first area A1 of the display panel 310 (e.g., a second direction D2), and the second protective film 422 may be located over the second area A2 of the display panel (e.g., a first direction D1). In this case, the first direction D1 and the second direction D2 may correspond to the thickness direction of the first area A1 of the display panel 310. Furthermore, the first direction D1 may be a direction toward the front surface of the display device 400, and the second direction D2 may be a direction toward the rear surface of the display device 400 (the direction opposite to the first direction D1). The protective film 420 may be located on one surface of the display panel 310 to prevent infiltration of foreign matter, such as air or moisture, from the outside and protect the display panel 310 from an external impact.

The cover layer 430 may include a light blocking layer 431, a buffer layer 433, a lower sheet 435, and a metal layer 437. The cover layer 430 may include a first cover area C1 overlapping the spacer 440, which will be described below, in the first direction D1 and a second cover area C2 not overlapping the spacer 440 in the first direction D1. Alternatively, the first cover area C1 of the cover layer 430 may be an area in which a first buffer layer 433a to be described below is located, and the second cover area C2 of the cover layer 430 may be an area in which a second buffer layer 433b to be described below is located. The thickness t1 of the first cover area C1 of the cover layer 430 in the first direction D1 may be smaller than the thickness t2 of the second cover area C2 of the cover layer 430 in the first direction D1.

The light blocking layer 431 (e.g., an embo layer) may be located between the protective film 420 and the buffer layer 433. The light blocking layer 431 may be located in the first cover area C1 and the second cover area C2. The light blocking layer 431 may be a double-sided adhesive sheet. For example, one surface of the light blocking layer 431 may be attached to the protective film 420, and an opposite surface of the light blocking layer 431 may be attached to the buffer layer 433. The light blocking layer 431 may include an embo pattern including fine convex portions and concave portions to prevent bubbles and improve adhesive force. Furthermore, the light blocking layer 431 may block light travelling in the direction from the display panel 310 to the rear surface of the electronic device 400.

The buffer layer 433 (e.g., a cushion layer or a sponge) may be located on one surface (e.g., the rear surface) of the light blocking layer 431 and may be attached to the protective film 420 by the light blocking layer 431. That is, the buffer layer 433 may be located under the light blocking layer 431 (e.g., the second direction D2). The buffer layer 433 may absorb shock applied to the electronic device 400 and may protect other components in the electronic device 400.

The buffer layer 433 may include the first buffer layer 433b overlapping the spacer 440 in the first direction D1. In the electronic device 400 according to an embodiment, the thickness t3 of the first buffer layer 433a in the first direction D1 may be smaller than the thickness t4 of the second buffer layer 433b in the first direction D1. In other words, the shortest distance t5 from the first area A1 of the display panel 310 to the rear surface of the first buffer layer 433a may be smaller than the shortest distance t6 from the first area A1 of the display panel 310 to the rear surface of the second buffer layer 433b.

In the electronic device 400 according to an embodiment, the first buffer layer 433a and the second buffer layer 433b may be spaced apart from each other. However, in some embodiments, partial areas of the first buffer layer 433a and the second buffer layer 433b may make contact with each other. The first buffer layer 433a and the second buffer layer 433b may contain the same material. Alternatively, the first buffer layer 433a and the second buffer layer 433b may contain different materials. For example, the first buffer layer 433a may contain a polymer such as polyimide (PI), and the second buffer layer 433b may contain a sponge. In other words, in the electronic device 400 according to an embodiment, the first buffer layer 433a may be replaced with a polymer layer containing a polymer such as polyimide (PI).

The lower sheet 435 may be located on one surface (e.g., the rear surface) of the buffer layer 433. That is, the lower sheet 435 may be located under the buffer layer 433 (e.g., the second direction D2). The lower sheet 435 may not overlap the spacer 440 in the first direction D1. The lower sheet 435 may be located in at least a portion of the second cover area C2 and may not be located in the entire region of the first cover area C1. That is, the lower sheet 435 may include an opening including a region corresponding to the entire region of the first cover area C1. The lower sheet 435 may contain at least one of polyimide (PI) or graphite. The lower sheet 435 may alleviate an impact applied to the electronic device 400 and may radiate heat generated from the electronic device 400.

The metal layer 437 may be located on one surface (e.g., the rear surface) of the lower sheet 435. That is, the metal layer 437 may be located under the lower sheet 435 (e.g., the second direction D2). The metal layer 437 may be located in both the first cover area C1 and the second cover area C2. The metal layer 437 may contain metal such as copper (Cu). The metal layer 437 may include a bent portion 437a that is bent by a step between the first buffer layer 433a and the second buffer layer 433b. The metal layer 437 may diffuse heat generated from the inside of the electronic device 400 to limit a temperature rise in the electronic device 400 and may shield electromagnetic noise.

The spacer 440 may be located between the metal layer 437 and the second protective film 422 and may attach the metal layer 437 and the second protective film 422 to each other. The spacer 440 may be located between the first area A1 and the second area A2 of the display panel 310 and may maintain a predetermined distance between the first area A1 and the second area A2. The spacer 440 may overlap the first cover area C1 of the cover layer 430 in the first direction D1. The spacer 440 may not overlap the second cover area C2 of the cover layer 430 in the first direction D1. The spacer 440 may overlap the first buffer layer 433a in the first direction D1. The spacer 440 may not overlap the second buffer layer 433b in the first direction D1. In the electronic device 400 according to an embodiment, the thickness of the first cover area C1 of the cover layer 430 that overlaps the spacer 440 may be smaller than the thickness of the second cover area C2, and thus the spacer 440 may have a predetermined thickness or more. In other words, as compared with when the thickness of the first cover area C1 is equal to the thickness of the second cover area C2, the spacer 440 may be formed to be thicker in the electronic device 400 according to an embodiment in which the thickness of the first cover area C1 is smaller than the thickness of the second cover area C2. Thus, the adhesive force of the spacer 440 may be improved, and delamination or separation between layers may be prevented.

The optically clear adhesive (OCA) layer 450 and the window 455 may be located on the first surface S1 of the first area A1 of the display panel 310 (e.g., the first direction D1). The window 455 may be attached to the display panel 310 by the optically clear adhesive layer 450. The window 455 may transmit light generated from the display panel 310. For example, the window 455 may contain reinforced glass, reinforced plastic, a flexible polymer material, or the like. In some embodiments, the window 455 may include a plurality of layers. The electronic device 400 according to an embodiment may further include a coating layer (or, a protective layer) located on one surface of the window 455. For example, the coating layer may contain a polymer such as polyethylene terephthalate (PET), polyimide (PI), or thermoplastic polyurethane (TPU). For example, the coating layer may be a single layer, or may include a plurality of layers.

The bending part protection layer 460 may be located on the bending area BA of the display panel 310. The bending part protection layer 460 may alleviate stress applied to the bending area BA of the display panel 310 by bending.

The display driver IC 470 may be located on the fourth surface S4 of the second area A2 of the display panel 310. That is, the display driver IC 470 may be located under the second area A2 of the display panel 310 (e.g., the second direction D2). In response to data and control signals supplied from the outside, the display driver IC 470 may transfer signals for driving pixels to the pixels of the display panel 310.

The DDI protection layer 475 may be located on the display driver IC 470 and may protect the display driver IC 470. The DDI protection layer 475 may be located on a side surface of the display driver IC 470. For example, the DDI protection layer 475 may cover an exposed area of the display driver IC 470 to protect the display driver IC 470.

The flexible printed circuit board 480 may be attached to one surface (e.g., the rear surface) of the metal layer 437 by the conductive adhesive layer 485. The flexible printed circuit board 480 may be connected with one end of the second area A2 of the display panel 310. The flexible printed circuit board 480 may be electrically connected with the display driver IC 470 and a processor (not illustrated) and may transfer signals related to driving the pixels (e.g., image data, an image control signal for controlling the image data, a touch control signal, and other control signals) to the display driver IC 470 and the processor.

Referring to FIG. 5, the light blocking layer 431 may be located in both the first cover area C1 and the second cover area C2. The light blocking layer 431 may include a plurality of openings 4311 in which sensor modules, such as a fingerprint sensor module or a camera sensor module, are located.

The buffer layer 433 may include the first buffer layer 433a located in the first cover area C1 and the second buffer layer 433b located in the second cover area C2. The first buffer layer 433a and the second buffer layer 433b may be spaced apart from each other. The second buffer layer 433b may include a plurality of openings 4331 in which the sensor modules are located.

The lower sheet 435 may be located in at least a portion of the second cover area C2 and may not be located in the first cover area C1. The lower sheet 435 may include a plurality of openings 4351 in which the sensor modules are located.

The metal layer 437 may be located in both the first cover area C1 and the second cover area C2. The metal layer 437 may include a plurality of openings 4371 in which the sensor modules are located. The metal layer 437 may include the bent portion 437a located between the first cover area C1 and the second cover area C2.

The spacer 440 may be located in an area overlapping the first cover area C1 of the cover layer 430 and may not overlap the second cover area C2.

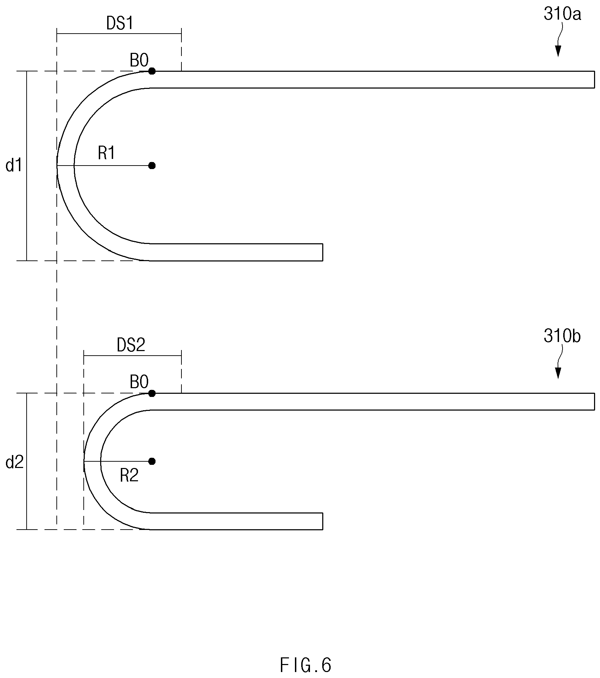

FIG. 6 is a sectional view illustrating display panels depending on the sizes of radii of curvature. Specifically, FIG. 6 illustrates a first display panel 310a bent with a first radius of curvature R1 and a second display panel 310b bent with a second radius of curvature R2.

The first display panel 310a may have a first dead space DS1 due to a bending area and a first distance d1 that is the distance between the top and the bottom of the first display panel 310a. The second display panel 310b may have a second dead space DS2 due to a bending area and a second distance d2 that is the distance between the top and the bottom of the second display panel 310b.

The first radius of curvature R1 may be greater than the second radius of curvature R2. The distances from bending start points BO to the outermost portions of the bending areas of the display panels may be determined based on the radii of curvature. When the first display panel 310a and the second display panel 310b are compared with each other, it can be seen that the length of the second dead space DS2 of the second display panel 310b that has a relatively small radius of curvature is shorter than the length of the first dead space DS1 of the first display panel 310a. In addition, it can be seen that the second distance d2 is shorter than the first distance d1. In other words, as the radii of curvature of the bending areas of the display panels are decreased, the dead spaces and the thicknesses may be decreased. In an electronic device according to an embodiment, the radius of curvature of a bending area of a display panel may be decreased by making a first cover area C1 of a cover layer 430 thinner. Accordingly, a dead space of the electronic device and the thickness thereof may be decreased.

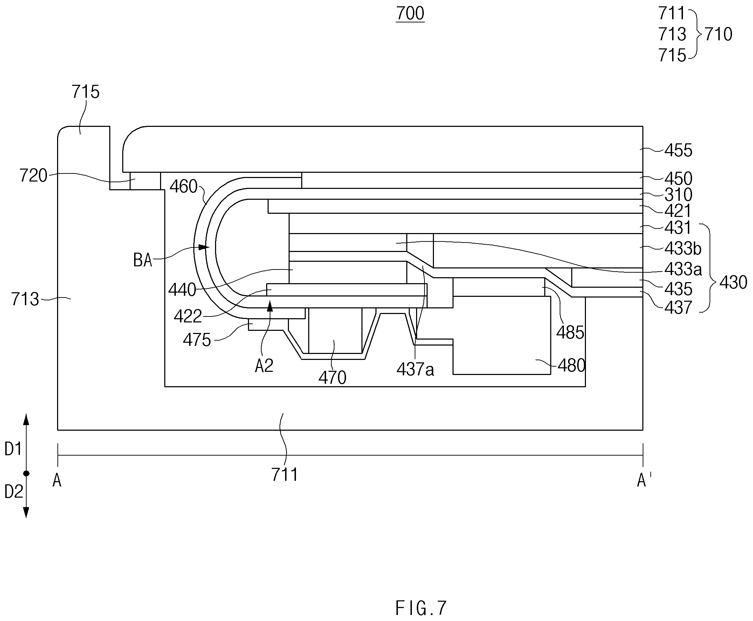

Hereinafter, an electronic device according to an embodiment will be described with reference to FIG. 7. FIG. 7 is a sectional view taken along line A-A' of FIG. 1 in the electronic device according to an embodiment. Repetitive detailed descriptions identical to ones given with reference to FIG. 4 will hereinafter be omitted. Referring to FIG. 7, the electronic device 700 according to an embodiment may include a display panel 310, a protective film 420, a cover layer 430, a spacer 440, an optically clear adhesive layer 450, a window 455, a bending part protection layer 460, a display driver IC (DDI) 470, a DDI protection layer 475, a flexible printed circuit board (FPCB) 480, a conductive adhesive layer 485, a housing 710, and an adhesive member 720. The cover layer 430 may include a light blocking layer 431, a buffer layer 433, a lower sheet 435, and a metal layer 437.

The housing 710 may include a rear portion 711 located on a rear surface of a display, a side portion 713 extending from the rear portion 711 and surrounding a side surface of the display, and a first protruding portion 715 that protrudes from the side portion 713 in a first direction D1 and that is located on a side of the window 455.

The adhesive member 720 may be located between the window 455 and the side portion 713 of the housing 710 and may fix the window 455 to the housing 710.

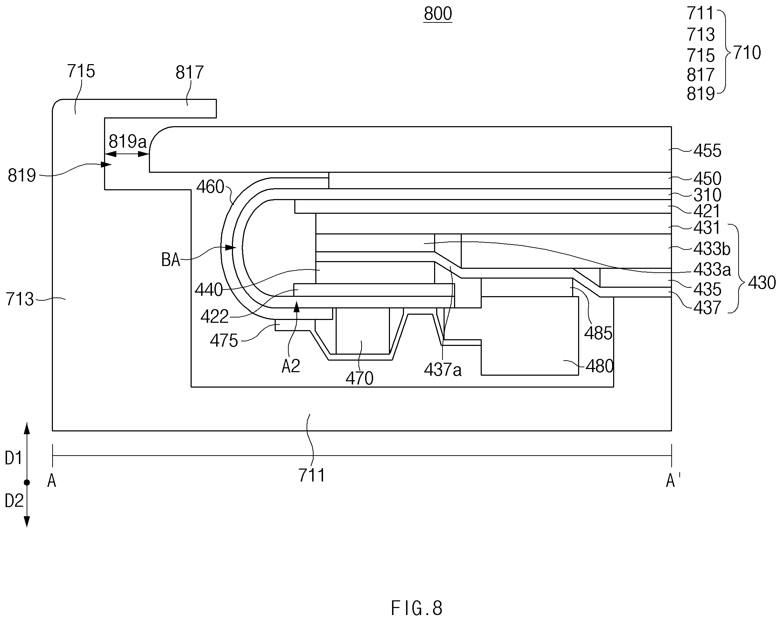

Hereinafter, an electronic device according to an embodiment will be described with reference to FIG. 8. FIG. 8 is a sectional view taken along line A-A' of FIG. 1 in the electronic device according to an embodiment. Repetitive detailed descriptions identical to ones given with reference to FIG. 4 will hereinafter be omitted. Referring to FIG. 8, the electronic device 800 according to an embodiment may include a display panel 310, a protective film 420, a cover layer 430, a spacer 440, an optically clear adhesive layer 450, a window 455, a bending part protection layer 460, a display driver IC (DDI) 470, a DDI protection layer 475, a flexible printed circuit board (FPCB) 480, a conductive adhesive layer 485, and a housing 710. The cover layer 430 may include a light blocking layer 431, a buffer layer 433, a lower sheet 435, and a metal layer 437. In some embodiments, at least one of the components may be omitted, or other component(s) (e.g., a metal support layer) may be additionally included.

Unlike in FIG. 7, the electronic device 800 according to an embodiment may not include the adhesive member 720. For example, the electronic device 800 according to an embodiment may be a foldable electronic device in which a partial area of a display can be folded.

The housing 710 may include a rear portion 711 located on a rear surface of the display, a side portion 713 extending from the rear portion 711 and surrounding a side surface of the display, a first protruding portion 715 that protrudes from the side portion 713 in a first direction D1 and that is located on a side of the window 455, a second protruding portion 817 extending and protruding from the first protruding portion 715, and a groove 819 formed by the side portion 713, the first protruding portion 715, and the second protruding portion 817. One end portion of the window 455 may be located in the groove 819 of the housing 710. Accordingly, the window 455 may not be separated from the housing 710 even though the window 455 is not attached to the housing 710. The window 455 and the first protruding portion 715 may be spaced apart from each other by a predetermined distance, and a separation space 819a in which the window 455 is movable may be located between the window 455 and the first protruding portion 715. The electronic device 800 according to an embodiment may include the separation space 819a, and thus the display panel 310 and components stacked on the display panel 310 may move in the housing 710. For example, when the foldable electronic device performs a folding motion or an unfolding motion, the display panel 310 and the components stacked on the display panel 310 may slide in the separation space 819a of the housing 710.

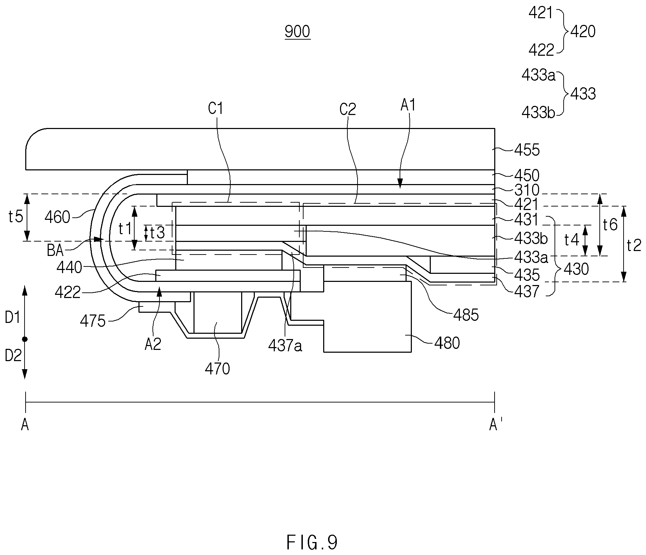

Hereinafter, an electronic device according to an embodiment will be described with reference to FIG. 9. FIG. 9 is a sectional view taken along line A-A' of FIG. 1 in the electronic device according to an embodiment. Repetitive detailed descriptions identical to ones given with regard to the electronic device 400 of FIG. 4 will hereinafter be omitted Referring to FIG. 9, the electronic device 900 according to an embodiment may include a display panel 310, a protective film 420, a cover layer 430, a spacer 440, an optically clear adhesive layer 450, a window 455, a bending part protection layer 460, a display driver IC (DDI) 470, a DDI protection layer 475, a flexible printed circuit board (FPCB) 480, and a conductive adhesive layer 485.

The cover layer 430 may include a light blocking layer 431, a buffer layer 433, a lower sheet 435, and a metal layer 437. The cover layer 430 may include a first cover area C1 overlapping the spacer 440 in a first direction D1 and a second cover area C2 not overlapping the spacer 440 in the first direction D1. Alternatively, the first cover area C1 of the cover layer 430 may be an area in which a first buffer layer 433a is located, and the second cover area C2 of the cover layer 430 may be an area in which a second buffer layer 433b is located. The thickness t1 of the first cover area C1 of the cover layer 430 in the first direction D1 may be smaller than the thickness t2 of the second cover area C2 of the cover layer 430 in the first direction D1.

The buffer layer 433 may include the first buffer layer 433a and the second buffer layer 433b. In the electronic device 900 according to an embodiment, the thickness t3 of the first buffer layer 433a in the first direction D1 may be smaller than the thickness t4 of the second buffer layer 433b in the first direction D1. In other words, the shortest distance t5 from a first area A1 of the display panel 310 to the rear surface of the first buffer layer 433a may be smaller than the shortest distance t6 from the first area A1 of the display panel 310 to the rear surface of the second buffer layer 433b. Unlike in FIG. 4, the first buffer layer 433a and the second buffer layer 433b may make contact with each other. The first buffer layer 433a and the second buffer layer 433b may contain the same material and may be integrally formed with each other. In some embodiments, the first buffer layer 433a and the second buffer layer 433b may contain different materials and may make contact with each other.

The spacer 440 may overlap the first cover area C1 of the cover layer 430 in the first direction D1. The spacer 440 may not overlap the second cover area C2 of the cover layer 430 in the first direction D1. The spacer 440 may overlap the first buffer layer 433a in the first direction D1. The spacer 440 may not overlap the second buffer layer 433b in the first direction D1.

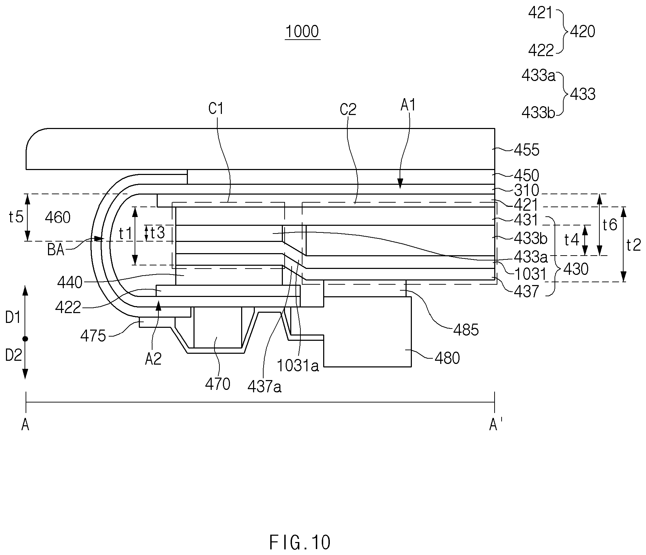

Hereinafter, an electronic device according to an embodiment will be described with reference to FIG. 10. FIG. 10 is a sectional view taken along line A-A' of FIG. 1 in the electronic device according to an embodiment. Repetitive detailed descriptions identical to ones given with regard to the electronic device 400 of FIG. 4 will hereinafter be omitted Referring to FIG. 10, the electronic device 1000 according to an embodiment may include a display panel 310, a protective film 420, a cover layer 430, a spacer 440, an optically clear adhesive layer 450, a window 455, a bending part protection layer 460, a display driver IC (DDI) 470, a DDI protection layer 475, a flexible printed circuit board (FPCB) 480, a conductive adhesive layer 485, and a sensing panel 1031.

The cover layer 430 may include a light blocking layer 431, a buffer layer 433, the sensing panel (e.g., a digitizer) 1031, and a metal layer 437. The cover layer 430 may include a first cover area C1 overlapping the spacer 440 in a first direction D1 and a second cover area C2 not overlapping the spacer 440 in the first direction D1. Alternatively, the first cover area C1 of the cover layer 430 may be an area in which a first buffer layer 433a is located, and the second cover area C2 of the cover layer 430 may be an area in which a second buffer layer 433b is located. The thickness t1 of the first cover area C1 of the cover layer 430 in the first direction D1 may be smaller than the thickness t2 of the second cover area C2 of the cover layer 430 in the first direction D1.

The buffer layer 433 may include the first buffer layer 433a overlapping the spacer 440 in the first direction D1 and the second buffer layer 433b not overlapping the spacer 440 in the first direction D1. In the electronic device 1000 according to an embodiment, the thickness t3 of the first buffer layer 433a in the first direction D1 may be smaller than the thickness t4 of the second buffer layer 433b in the first direction D1. In other words, the shortest distance t5 from a first area A1 of the display panel 310 to the rear surface of the first buffer layer 433a may be smaller than the shortest distance t6 from the first area A1 of the display panel 310 to the rear surface of the second buffer layer 433b. In the electronic device 1000 according to an embodiment, the first buffer layer 433a and the second buffer layer 433b may be spaced apart from each other. However, in some embodiments, partial areas of the first buffer layer 433a and the second buffer layer 433b may make contact with each other.

The sensing panel 1031 may be located on one surface (e.g., the rear surface) of the buffer layer 433. That is, the sensing panel 1031 may be located under the buffer layer 433 (e.g., a second direction D2). The sensing panel 1031 may be located in the first cover area C1 and the second cover area C2. The sensing panel 1031 may sense a touch by a pen input device (e.g., a stylus pen). The sensing panel 1031 may sense not only a direct contact input by the pen input device but also a proximity input or a hovering input to the electronic device 1000. The sensing panel 1031 may be configured in various types, such as an electromagnetic resonance (EMR) type, a pressure sensitive type, and a capacitive type. The sensing panel 1031 may include a bent portion 1031a that is bent by a step between the first buffer layer 433a and the second buffer layer 433b.

The metal layer 437 may be located on one surface of the sensing panel 1031. That is, the metal layer 437 may be located under the sensing panel 1031 (e.g., the second direction D2). The metal layer 437 may be located in the first cover area C1 and the second cover area C2. The metal layer 437 may include a bent portion 437a that is bent by the step between the first buffer layer 433a and the second buffer layer 433b.

The spacer 440 may overlap the first cover area C1 of the cover layer 430 in the first direction D1. The spacer 440 may not overlap the second cover area C2 of the cover layer 430 in the first direction D1. The spacer 440 may overlap the first buffer layer 433a in the first direction D1. The spacer 440 may not overlap the second buffer layer 433b in the first direction D1.

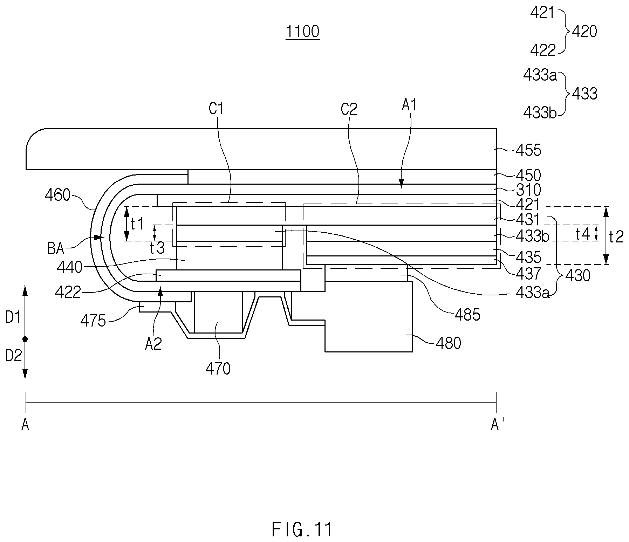

Hereinafter, an electronic device according to an embodiment will be described with reference to FIG. 11. FIG. 11 is a sectional view taken along line A-A' of FIG. 1 in the electronic device according to an embodiment. Referring to FIG. 11, the electronic device 1100 according to an embodiment may include a display panel 310, a protective film 420, a cover layer 430, a spacer 440, an optically clear adhesive layer 450, a window 455, a bending part protection layer 460, a display driver IC (DDI) 470, a DDI protection layer 475, a flexible printed circuit board (FPCB) 480, and a conductive adhesive layer 485.

The cover layer 430 may include a light blocking layer 431, a buffer layer 433, a lower sheet 435, and a metal layer 437. The cover layer 430 may include a first cover area C1 overlapping the spacer 440 in a first direction D1 and a second cover area C2 not overlapping the spacer 440 in the first direction D1. Alternatively, the first cover area C1 of the cover layer 430 may be an area in which a first buffer layer 433a is located, and the second cover area C2 of the cover layer 430 may be an area in which a second buffer layer 433b is located. The thickness t1 of the first cover area C1 of the cover layer 430 in the first direction D1 may be smaller than the thickness t2 of the second cover area C2 of the cover layer 430 in the first direction D1.

The buffer layer 433 may include the first buffer layer 433a overlapping the spacer 440 in the first direction D1 and the second buffer layer 433b not overlapping the spacer 440 in the first direction D1.

The lower sheet 435 may be located on one surface (e.g., the rear surface) of the buffer layer 433. That is, the lower sheet 435 may be located under the buffer layer 433 (e.g., a second direction D2). The lower sheet 435 may be located in the second cover area C2 and may not be located in the first cover area C1. The lower sheet 435 may not overlap the spacer 440 in the first direction D1. The lower sheet 435 may contain polyimide (PI) or graphite. The lower sheet 435 may alleviate an impact applied to the electronic device 400 and may radiate heat generated from the electronic device 400.

The metal layer 437 may be located on one surface (e.g., the rear surface) of the lower sheet 435. That is, the metal layer 437 may be located under the lower sheet 435 (e.g., the second direction D2). The metal layer 437 may be located in the second cover area C2 and may not be located in the first cover area C1. The metal layer 437 may not overlap the spacer 440 in the first direction D1. The metal layer 437 may contain metal such as copper (Cu). The metal layer 437 may diffuse heat generated from the inside of the electronic device 400 to limit a temperature rise in the electronic device 400 and may shield electromagnetic noise.

The spacer 440 may overlap the first cover area C1 of the cover layer 430 in the first direction D1. The spacer 440 may not overlap the second cover area C2 of the cover layer 430 in the first direction D1. The spacer 440 may overlap the first buffer layer 433a in the first direction D1. The spacer 440 may not overlap the second buffer layer 433b in the first direction D1. The spacer 440 may not overlap the lower sheet 435 and the metal layer 437 in the first direction D1.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

According to the situation, the expression "adapted to or configured to" used in this disclosure may be used interchangeably with, for example, the expression "suitable for", "having the capacity to", "adapted to", "made to", "capable of", or "designed to" in hardware or software. The expression "a device configured to" may mean that the device is "capable of" operating together with another device or other components. For example, a "processor set to (or configured to) perform A, B, and C" may mean a dedicated processor (e.g., an embedded processor) for performing corresponding operations or a generic-purpose processor (e.g., a CPU or an AP) that performs corresponding operations by executing one or more programs stored in a memory device (e.g., the memory 130).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. The "module" may be implemented mechanically or electronically and may include, for example, an application-specific integrated circuit (ASIC) chip, field-programmable gate arrays (FPGAs), or a programmable-logic device for performing some operations, which are known or will be developed.

At least a part of an apparatus (e.g., modules or functions thereof) or a method (e.g., operations) according to various embodiments may be implemented by instructions stored in computer-readable storage media (e.g., the memory 130) in the form of a program module. The instructions, when executed by a processor (e.g., the processor 120), may cause the processor to perform functions corresponding to the instructions. The computer-readable storage media may include a hard disk, a floppy disk, a magnetic media (e.g., a magnetic tape), an optical media (e.g., CD-ROM, DVD, magneto-optical media (e.g., a floptical disk)), an embedded memory, and the like. The instructions may include a code made by a compiler or a code executable by an interpreter.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100, 400) comprising:
a display panel (310) including a first area (A1), a second area (A2) facing the first area (A1), and a bending area (BA) located between the first area (A1) and the second area (A2);
a cover layer (430) located under the first area (A1) of the display panel (310), the cover layer (430) including at least one of a light blocking layer (431), a buffer layer (433), a lower sheet (435), or a metal layer (437); and
a spacer (440) located between the second area (A2) of the display panel (310) and the cover layer (430),
wherein the cover layer (430) includes a first cover area (C1) configured to overlap the spacer (440) in a first direction and a second cover area (C2) configured so as not to overlap the spacer (440) in the first direction, the first direction being a thickness direction of the first area (A1), and
wherein a thickness of the cover layer (430) in the first direction in the first cover area (C1) is smaller than a thickness of the cover layer (430) in the first direction in the second cover area (C2).

2. The electronic device (100, 400) of claim 1, wherein the buffer layer (433) includes a first buffer layer (433a) located in the first cover area (C1) and a second buffer layer (433b) located in the second cover area (C2), and
wherein a thickness of the first buffer layer (433a) in the first direction is smaller than a thickness of the second buffer layer (433b) in the first direction.

3. The electronic device (100, 400) of claim 2, wherein the first buffer layer (433a) is spaced apart from the second buffer layer (433b).

4. The electronic device (100, 400) of claim 2, wherein the first buffer layer (433a) is integrally formed with the second buffer layer (433b).

5. The electronic device (100, 400) of claim 2, wherein the first buffer layer (433a) and the second buffer layer (433b) contain different materials.

6. The electronic device (100, 400) of claim 1, wherein the spacer (440) does not overlap at least one of the lower sheet (435) or the metal layer (437) in the first direction.

7. The electronic device (100, 400) of claim 1, wherein the lower sheet (435) contains polyimide or graphite.

8. The electronic device (100, 400) of claim 1, wherein the cover layer (430) further includes a sensing panel (1031).

9. The electronic device (100, 400) of claim 1, further comprising:
a display driver IC located in the second area (A2) of the display panel (310).

10. The electronic device (100, 400) of claim 1, further comprising:
a first protective film located between the first area (A1) of the display panel (310) and the cover layer (430); and
a second protective film located between the second area (A2) of the display panel (310) and the spacer (440).

11. The electronic device (100, 400) of claim 1
wherein the lower sheet (435) is located under the buffer layer (433), and
wherein the lower sheet (435) does not overlap the spacer (440) in the first direction.

12. The electronic device (100, 400) of claim 11
wherein the metal layer (437) is located under the buffer layer (433).

13. The electronic device (100, 400) of claim 12, wherein the metal layer (437) does not overlap the spacer (440) in the first direction.

14. The electronic device (100, 400) of claim 12
wherein the light blocking layer (431) is located between the first area (A1) of the display panel (310) and the buffer layer (433),
wherein the light blocking layer (431) includes an embo pattern.

## Patentansprüche

1. Elektronische Vorrichtung (100, 400), umfassend:
eine Anzeigetafel (310), die einen ersten Bereich (A1), einen zweiten Bereich (A2), der dem ersten Bereich (A1) zugewandt ist, und einen Biegebereich (BA) beinhaltet, der sich zwischen dem ersten Bereich (A1) und dem zweiten Bereich (A2) befindet;
eine Deckschicht (430), die sich unter dem ersten Bereich (A1) der Anzeigetafel (310) befindet, wobei die Deckschicht (430) mindestens eine von einer lichtblockierenden Schicht (431), einer Pufferschicht (433), einer unteren Platte (435) oder einer Metallschicht (437) beinhaltet; und
einen Abstandhalter (440), der sich zwischen dem zweiten Bereich (A2) der Anzeigetafel (310) und der Deckschicht (430) befindet,
wobei die Deckschicht (430) einen ersten Deckbereich (C1), der so konfiguriert ist, dass er den Abstandhalter (440) in einer ersten Richtung überlappt, und einen zweiten Deckbereich (C2) beinhaltet, der so konfiguriert ist, dass er den Abstandhalter (440) in der ersten Richtung nicht überlappt, wobei die erste Richtung eine Dickenrichtung des ersten Bereichs (A1) ist, und
wobei eine Dicke der Deckschicht (430) in der ersten Richtung in dem ersten Deckbereich (C1) kleiner ist als eine Dicke der Deckschicht (430) in der ersten Richtung in dem zweiten Deckbereich (C2).

2. Elektronische Vorrichtung (100, 400) nach Anspruch 1, wobei die Pufferschicht (433) eine erste Pufferschicht (433a), die sich im ersten Decksbereich (C1) befindet, und eine zweite Pufferschicht (433b), die sich im zweiten Deckbereich (C2) befindet, beinhaltet, und
wobei eine Dicke der ersten Pufferschicht (433a) in der ersten Richtung kleiner ist als eine Dicke der zweiten Pufferschicht (433b) in der ersten Richtung.

3. Elektronische Vorrichtung (100, 400) nach Anspruch 2, wobei die erste Pufferschicht (433a) von der zweiten Pufferschicht (433b) beabstandet ist.

4. Elektronische Vorrichtung (100, 400) nach Anspruch 2, wobei die erste Pufferschicht (433a) einstückig mit der zweiten Pufferschicht (433b) ausgebildet ist.

5. Elektronische Vorrichtung (100, 400) nach Anspruch 2, wobei die erste Pufferschicht (433a) und die zweite Pufferschicht (433b) unterschiedliche Materialien enthalten.

6. Elektronische Vorrichtung (100, 400) nach Anspruch 1, wobei der Abstandhalter (440) mindestens eine der unteren Platte (435) oder der Metallschicht (437) in der ersten Richtung nicht überlappt.

7. Elektronische Vorrichtung (100, 400) nach Anspruch 1, wobei die untere Platte (435) Polyimid oder Graphit enthält.

8. Elektronische Vorrichtung (100, 400) nach Anspruch 1, wobei die Deckschicht (430) ferner eine Erfassungstafel (1031) beinhaltet.

9. Elektronische Vorrichtung (100, 400) nach Anspruch 1, ferner umfassend:
eine Anzeigetreiber-IC, die sich im zweiten Bereich (A2) der Anzeigetafel (310) befindet.

10. Elektronische Vorrichtung (100, 400) nach Anspruch 1, ferner umfassend:
eine erste Schutzfolie, die sich zwischen dem ersten Bereich (A1) der Anzeigetafel (310) und der Deckschicht (430) befindet; und
eine zweite Schutzfolie, die sich zwischen dem zweiten Bereich (A2) der Anzeigetafel (310) und dem Abstandhalter (440) befindet.

11. Elektronische Vorrichtung (100, 400) nach Anspruch 1,
wobei sich die untere Platte (435) unter der Pufferschicht (433) befindet, und
wobei die untere Platte (435) den Abstandhalter (440) in der ersten Richtung nicht überlappt.

12. Elektronische Vorrichtung (100, 400) nach Anspruch 11,
wobei sich die Metallschicht (437) unter der Pufferschicht (433) befindet.

13. Elektronische Vorrichtung (100, 400) nach Anspruch 12, wobei die Metallschicht (437) den Abstandhalter (440) in der ersten Richtung nicht überlappt.

14. Elektronische Vorrichtung (100, 400) nach Anspruch 12,
wobei sich die lichtblockierende Schicht (431) zwischen dem ersten Bereich (A1) der Anzeigetafel (310) und der Pufferschicht (433) befindet,
wobei die lichtblockierende Schicht (431) ein Embo-Muster beinhaltet.

## Revendications

1. Dispositif électronique (100, 400) comprenant :
un panneau d'affichage (310) comprenant une première zone (A1), une seconde zone (A2) faisant face à la première zone (A1), et une zone de pliage (BA) située entre la première zone (A1) et la seconde zone (A2) ;
une couche de recouvrement (430) située sous la première zone (A1) du panneau d'affichage (310), la couche de recouvrement (430) comprenant au moins une d'une couche de blocage de lumière (431), d'une couche tampon (433), d'une feuille inférieure (435) ou d'une couche métallique (437) ; et
une entretoise (440) située entre la seconde zone (A2) du panneau d'affichage (310) et la couche de recouvrement (430),
dans lequel la couche de recouvrement (430) comprend une première zone de recouvrement (C1) configurée pour chevaucher l'entretoise (440) dans une première direction et une seconde zone de recouvrement (C2) configurée de manière à ne pas chevaucher l'entretoise (440) dans la première direction, la première direction étant une direction d'épaisseur de la première zone (A1), et
dans lequel une épaisseur de la couche de recouvrement (430) dans la première direction dans la première zone de recouvrement (C1) est inférieure à une épaisseur de la couche de recouvrement (430) dans la première direction dans la seconde zone de recouvrement (C2).

2. Dispositif électronique (100, 400) de la revendication 1, dans lequel la couche tampon (433) comprend une première couche tampon (433a) située dans la première zone de recouvrement (C1) et une seconde couche tampon (433b) située dans la seconde zone de recouvrement (C2), et
dans lequel une épaisseur de la première couche tampon (433a) dans la première direction est inférieure à une épaisseur de la seconde couche tampon (433b) dans la première direction.

3. Dispositif électronique (100, 400) de la revendication 2, dans lequel la première couche tampon (433a) est espacée de la seconde couche tampon (433b).

4. Dispositif électronique (100, 400) de la revendication 2, dans lequel la première couche tampon (433a) est formée intégralement avec la seconde couche tampon (433b).

5. Dispositif électronique (100, 400) de la revendication 2, dans lequel la première couche tampon (433a) et la seconde couche tampon (433b) contiennent des matériaux différents.

6. Dispositif électronique (100, 400) de la revendication 1, dans lequel l'entretoise (440) ne chevauche pas au moins l'une de la feuille inférieure (435) ou de la couche métallique (437) dans la première direction.

7. Dispositif électronique (100, 400) de la revendication 1, dans lequel la feuille inférieure (435) contient du polyimide ou du graphite.

8. Dispositif électronique (100, 400) de la revendication 1, dans lequel la couche de recouvrement (430) comprend en outre un panneau de détection (1031).

9. Dispositif électronique (100, 400) de la revendication 1, comprenant en outre :
un IC de commande d'affichage situé dans la seconde zone (A2) du panneau d'affichage (310).

10. Dispositif électronique (100, 400) de la revendication 1, comprenant en outre :
un premier film de protection situé entre la première zone (A1) du panneau d'affichage (310) et la couche de recouvrement (430) ; et
un second film de protection situé entre la seconde zone (A2) du panneau d'affichage (310) et l'entretoise (440).

11. Dispositif électronique (100, 400) de la revendication 1,
dans lequel la feuille inférieure (435) est située sous la couche tampon (433), et
dans lequel la feuille inférieure (435) ne chevauche pas l'entretoise (440) dans la première direction.

12. Dispositif électronique (100, 400) de la revendication 11,
dans lequel la couche métallique (437) est située sous la couche tampon (433).

13. Dispositif électronique (100, 400) de la revendication 12, dans lequel la couche métallique (437) ne chevauche pas l'entretoise (440) dans la première direction.

14. Dispositif électronique (100, 400) de la revendication 12,
dans lequel la couche de blocage de lumière (431) est située entre la première zone (A1) du panneau d'affichage (310) et la couche tampon (433),
dans lequel la couche de blocage de lumière (431) comprend un motif embo.
